(19) Europäisches Patentamt / European Patent Office / Office européen des brevets

(11) **EP 3 016 453 B1**

(12) **EUROPEAN PATENT SPECIFICATION**

(45) Date of publication and mention
of the grant of the patent:
**30.08.2023 Bulletin 2023/35**

(21) Application number: **14817252.1**

(22) Date of filing: **07.03.2014**

(51) International Patent Classification (IPC):
**H04W 52/34** (2009.01)    **H04W 52/24** (2009.01)
**H04W 72/04** (2023.01)

(52) Cooperative Patent Classification (CPC):
**H04W 72/0473; H04W 52/24; H04W 52/346**

(86) International application number:
**PCT/JP2014/056035**

(87) International publication number:
**WO 2014/208140 (31.12.2014 Gazette 2014/53)**

(54) **WIRELESS BASE STATION AND WIRELESS COMMUNICATION METHOD**

DRAHTLOSE BASISSTATION UND DRAHTLOSKOMMUNIKATIONSVERFAHREN

STATION DE BASE SANS FIL ET MÉTHODE DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2013 JP 2013136414**

(43) Date of publication of application:
**04.05.2016 Bulletin 2016/18**

(73) Proprietor: **NTT DOCOMO, INC.**
**Chiyoda-ku**
**Tokyo 100-6150 (JP)**

(72) Inventors:
• **BENJEBBOUR, Anass**
**Tokyo 100-6150 (JP)**
• **KISHIYAMA, Yoshihisa**
**Tokyo 100-6150 (JP)**

(74) Representative: **Hoffmann Eitle**
**Patent- und Rechtsanwälte PartmbB**
**Arabellastraße 30**
**81925 München (DE)**

(56) References cited:
**WO-A1-2012/120797    WO-A2-2011/005791**

• **Nagisa Otao ET AL: "Performance of
Non-orthogonal Multiple Access with SIC in
Cellular Downlink Using Proportional Fair-Based
Resource Allocation", IEICE Transactions on
Communications, 25 October 2012 (2012-10-25),
pages 344-351, XP055328247, DOI:
10.1587/transcom.E98.B.344 Retrieved from the
Internet:
URL:http://ieeexplore.ieee.org/iel5/632400
1/6328315/06328413.pdf [retrieved on
2016-12-12]**
• **YUYA SAITO ET AL.: 'Non-Orthogonal Multiple
Access (NOMA) for Cellular Future Radio Access'
VEHICULAR TECHNOLOGY CONFERENCE (VTC
SPRING), 2013 IEEE 77TH 01 June 2013, pages 1
- 5, XP055197795 DOI:
10.1109/VTCSPRING.2013.6692652**
• **Deliverable D2: "Document Number:
ICT-317669-METIS/D2.2 Project Name: Mobile
and wireless communications Enablers for the
Twenty-twenty Information Society (METIS)", , 31
October 2013 (2013-10-31), XP055248875,
Retrieved from the Internet:
URL:https://www.metis2020.com/wp-content/u
ploads/deliverables/METIS_D2.2_v1.pdf
[retrieved on 2016-02-10]**

**EP 3 016 453 B1**

**Description**

Technical Field

The present invention relates to a radio base station, a user terminal and a radio communication method in a next-generation mobile communication system.

Background Art

Conventionally, various radio communication schemes are used in radio communication systems. For example, in UMTS (Universal Mobile Telecommunications System), which is also referred to as "W-CDMA (Wideband Code Division Multiple Access)," code division multiple access (CDMA) is used. Also, in LTE (Long Term Evolution), orthogonal frequency division multiple access (OFDMA) is used (see, for example, non-patent literature 1).

Citation List

Non-Patent Literature

Non-Patent Literature 1: 3GPP TR 25.913 "Requirements for Evolved UTRA and Evolved UTRAN"

WO 2011/005791 A2 provides an apparatus for wireless communications including a processing system, whereas the processing system is configured to determine path-losses between the apparatus and a plurality of wireless nodes, to group the plurality of wireless nodes into sets based on the determined path-losses, and to exchange data with at least one of the wireless nodes in one of the sets.

Nagisa Otao ET AL, "Performance of Non-orthogonal Multiple Access with SIC in Cellular Downlink Using Proportional Fair-Based Resource Allocation", IEICE Transactions on Communications, doi:10.1587/transcom.E98.B.344, (20121025), pages 344 - 351, URL: http://ieeexplore.ieee.org/iel5/6324001/6328315/06328413.pdf, (20161212) discusses non-orthogonal access with successive interference cancellation (SIC) using a proportional fair (PF) based resource allocation (bandwidth and transmission power). In addition, a scheduling policy is provided, in order to select a user set, and is based on a scheduling metric that maximizes the product of the average user throughput among users within a cell.

YUYA SAITO ET AL., "Non-Orthogonal Multiple Access (NOMA) for Cellular Future Radio Access", VEHICULAR TECHNOLOGY CONFERENCE (VTC SPRING), 2013 IEEE 77TH, (20130601), doi:10.1109/VTCSPRING.2013.6692652, pages 1 - 5, XP055197795 discloses a non-orthogonal multiple access (NOMA) concept for cellular future radio access (FRA) towards the 2020s information society. Different from the current LTE radio access scheme (until Release 11), NOMA superposes multiple users in the power domain although its basic signal waveform could be based on the orthogonal frequency division multiple access (OFDMA) or the discrete Fourier transform (DFT)-spread OFDM the same as LTE baseline. Therein, NOMA adopts a successive interference cancellation (SIC) receiver as the baseline receiver scheme for robust multiple access. Based on system-level evaluations, the downlink NOMA with SIC improves both the capacity and cell-edge user throughput performance irrespective of the availability of the frequency-selective channel quality indicator (CQI) on the base station side. Furthermore, possible extensions of NOMA are discussed by jointly applying multi-antenna/site technologies with a proposed NOMA/MIMO scheme using SIC and an interference rejection combining (IRC) receiver to achieve further capacity gains, e.g., a three-fold gain in the spectrum efficiency representing a challenging target for FRA.

ICT-317669-METIS/D.2. Project Name: Mobile and wireless communications Enablers for the Twenty-twenty Information Society (METIS)", 31 October 2013, XP055248875, Retrieved from the Internet: https://www.metis2020.com/wpcontent/uploads/deliverables/METIS_D2.2_vl.pdf provides a detailed overview of the Radio Link concepts being developed in METIS as well as a detailed analysis of the related state of the art. For each of the research topics identified for the radio link research covering flexible air interface, new waveforms, modulation and coding techniques as well as multiple access, medium access control and enablers for radio resource management, a detailed description is provided.

Summary of Invention

Technical Problem

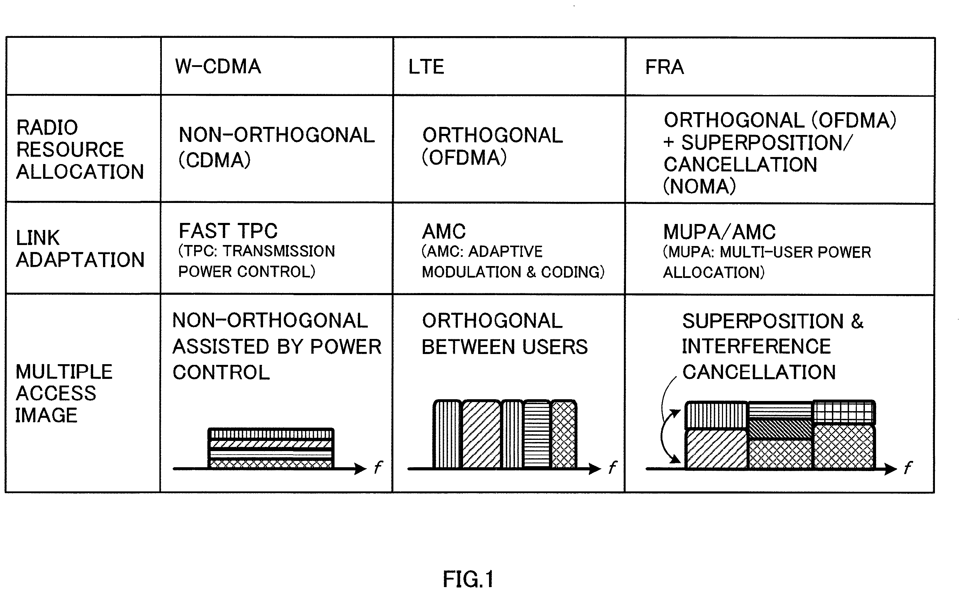

Now, as shown in FIG. 1, the radio communication scheme called "FRA" (Future Radio Access) and so on is under study as a successor of W-CDMA and LTE. In FRA, in addition to OFDMA, non-orthogonal multiple access (NOMA), which is premised upon canceling interference (interference cancellation) on the receiving side, is anticipated as a downlink radio resource allocation scheme.

In non-orthogonal multiple access, downlink signals for a plurality of user terminals are superposed over the same radio resource allocated by OFDMA, and transmitted with different transmission power, depending on each user terminal's channel gain. On the receiving side, the downlink signal for a subject terminal is extracted adequately by cancelling the downlink signals for the other user terminals by using SIC (Successive Interference Cancellation) and so on.

Also, as for link adaptation in each radio communication scheme, W-CDMA uses transmission power control (Fast TPC), and LTE uses adaptive modulation and coding (AMC), which adjusts the modulation scheme and coding rate adaptively. In FRA, although the use of transmission power allocation and adaptive modulation and coding for multiple users (MUPA: Multi-User Power Allocation/AMC) is under study, further improvement of link adaptation is in demand.

The present invention has been made in view of the above, and it is therefore an object of the present invention to provide a radio base station, and a radio communication method to realize link adaptation that is optimal for future radio communication systems.

Solution to Problem

A radio base station, according to the present invention, comprises all features of independent claim 1. Further preferred embodiments are defined in the claims 2-6. A radio communication method according to the present invention is defined by the features of claim 7. Advantageous Effects of Invention

According to the present invention, transmission power is fixed per user group, so that transmission power does not fluctuate as long as user terminals belong to the same user group. Consequently, it is possible to avoid selecting inadequate modulation schemes and coding schemes in the rush of transmission power control. Also, since user sets are determined by selecting users from every user group, it is possible to reduce the amount of calculation for determining user sets compared to the configuration to determine user sets from all users.

Brief Description of Drawings

FIG. 1 is a diagram to explain radio access schemes used in various radio communication systems;
FIG. 2 is a diagram to explain NOMA (non-orthogonal multiple access);
FIG. 3 is a flowchart to explain the transmission process in NOMA;
FIG. 4 provides diagrams to explain user terminal grouping and transmission power allocation methods;
FIG. 5 provides diagrams to explain the steps of communication in NOMA;
FIG. 6 is a diagram to show a schematic structure of a radio communication system;
FIG. 7 is a block diagram to show an example structure of a radio base station;
FIG. 8 is a block diagram to show an example structure of a user terminal; and
FIG. 9 is a block diagram to show example structures of baseband signal processing sections provided in a radio base station and a user terminal.

Description of Embodiments

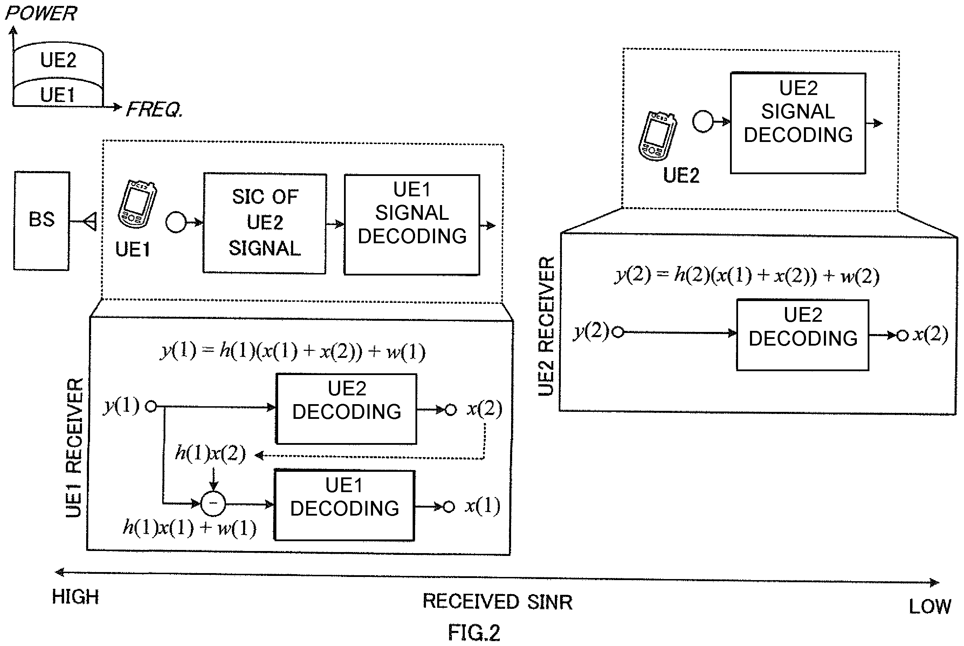

FIG. 2 is a diagram to explain NOMA (non-orthogonal multiple access) on the downlink. FIG. 2 shows a case where, in the coverage area of a radio base station BS, a user terminal UE 1 is located near the radio base station BS and a user terminal UE 2 is located far from the radio base station BS. The path loss of downlink signals from the radio base station BS to each user terminal UE increases with the distance from the radio base station BS. Consequently, the received SINR at the user terminal UE 2 that is located far from the radio base station BS becomes lower than the received SINR at the user terminal UE 1 that is located near the radio base station BS.

In NOMA, a plurality of user terminals UE are multiplexed over the same radio resource by applying varying (different) transmission power depending on channel gain (for example, the SINR, the RSRP, etc.), path loss and so on. For example, in FIG. 2, downlink signals for the user terminals UE 1 and UE 2 are multiplexed over the same radio resource, with different transmission power. The downlink signal for the user terminal UE 1 where the received SINR is high is allocated relatively small transmission power, and the downlink signal for the user terminal UE 2 where the received SINR is low is allocated relatively large transmission power.

Also, in NOMA, the downlink signals for a subject terminal are extracted by cancelling interference signals from received signals by means of SIC, which is a successive interference canceller-based signal separation method. For the downlink signals for the subject terminal, downlink signals for other terminals that are non-orthogonal-multiplexed over the same radio resource with greater transmission power than that of the subject terminal become interference signals. Consequently, the downlink signals for the subject terminal are extracted by cancelling downlink signals for other terminals with greater transmission power than that of the subject terminal, from received signals, by means of SIC.

For example, referring to FIG. 2, the received SINR of the user terminal UE 2 is lower than the received SINR of the user terminal UE 1, and therefore the downlink signal for the user terminal UE 2 is transmitted with greater transmission power than that of the downlink signal for the user terminal UE 1. Consequently, the user terminal UE 1 located near the radio base station BS not only receives the downlink signal for the subject terminal, but also receives, as an interference signal, the downlink signal for the user terminal UE 2 that is non-orthogonal-multiplexed over the same radio resource. The user terminal UE 1 extracts and adequately decodes the downlink signal for the subject terminal by canceling the downlink signal for the user terminal UE 2 by means of SIC.

Meanwhile, the received SINR at the user terminal UE 1 is higher than the received SINR at the user terminal UE 2, so that the downlink signal for the user terminal UE 1 is transmitted with smaller transmission power than that of the downlink signal for the user terminal UE 2. Consequently, the user terminal UE 2 that is located far from the radio base station BS can ignore the downlink signal for the user terminal UE 1 that is non-orthogonal-multiplexed over same radio resource, and adequately receives the downlink signal for the subject terminal. The user terminal UE 2 can ignore the interference by the downlink signal for the user terminal UE 1, and therefore extracts and adequately decodes the downlink signal for the subject terminals without carrying out interference cancellation by means of SIC.

In this way, when NOMA is applied to the downlink, a plurality of user terminals UE 1 and UE 2 with varying channel gains (received SINRs, and/or the like) can be multiplexed over the same radio resource, so that it is possible to improve the spectral efficiency.

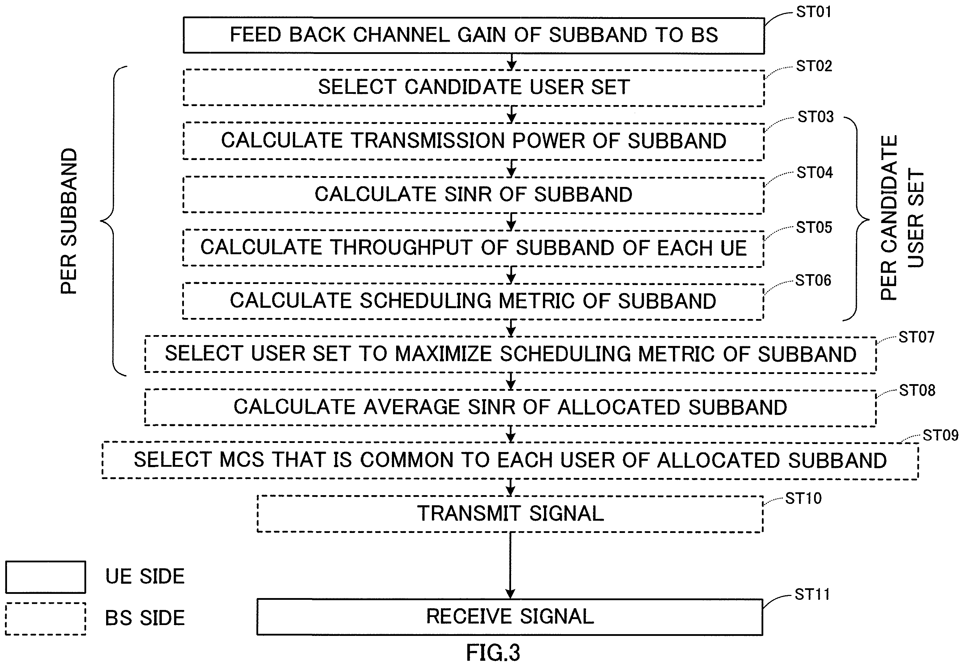

Now, the transmission process in NOMA will be described. FIG. 3 is a flowchart to explain the transmission process in NOMA. First, each user terminal UE receives a reference signal from a radio base station BS, and estimates the channel gain based on this reference signal. Then, each user terminal UE feeds back the channel gain to the radio base station BS (step ST01). Note that, for the reference signal, the CSI-RS (Channel State Information Reference Signal), the DM-RS (DeModulation Reference Signal), the CRS (Cell-Specific Reference Signal) and so on may be used.

Next, the radio base station BS selects a group of candidate user sets, on a per subband basis, from all the user terminals that belong to the coverage area (step ST02). A candidate user set refers to a combination of candidate user terminals that are non-orthogonal-multiplexed over a subband. The total number of candidate user sets per subband is represented by following equation 1, where $N_{max}$ is the number of user terminals that are non-orthogonal-multiplexed, and M is the total number of user terminals UE that belong to the coverage area. Note that the following calculation process sequence (steps ST03 to ST06) is carried out for all of the candidate user sets (exhaustive search).

[1]

$$\binom{M}{N_{\max}} \qquad \dots \text{(Equation 1)}$$

Next, the radio base station BS calculates the transmission power to be allocated to the user terminals UE of each candidate user set, based on the channel gain that is fed back from each user terminal UE (step ST03). Next, the radio base station BS calculates the SINR (the SINR for scheduling) of each user terminal UE that is anticipated under the application of non-orthogonal-multiplexing, based on the transmission power (step ST04). Next, the radio base station BS determines the block error rate (BLER) of the MCS (Modulation and Coding Scheme) set from the SINR, and calculates the PF metric throughput of each user terminal UE (step ST05).

Next, from each user terminal's throughput and the average throughput, the radio base station BS calculates the PF scheduling metrics of the candidate user sets (step ST06). The PF scheduling metric $M_{sj,b}$ is represented by following equation 2, where $T_k$ is the average throughput and $R_{k,b}$ is the throughput. Note that the PF scheduling metric $M_{sj,b}$ represents the PF scheduling metric of the j-th candidate user set in the b-th subband. Also, k denotes the k-th user terminal in a candidate user set.

[2]

$$M_{S_j,b} = \sum_{k \in S_j} \frac{R_{k,b}(t)}{T_k(t)} \qquad \dots \text{(Equation 2)}$$

The radio base station BS selects the user set that maximizes the PF scheduling metric in each subband (step ST07). Then, the radio base station BS allocates the downlink signals for the user terminals UE constituting the user set to the same subband, and non-orthogonal-multiplexes these signals with varying transmission power. Next, the radio base station BS calculates the average SINR per subband (step ST08), and selects an MCS that is common to each user terminal of the subband (step ST09). Next, the radio base station BS transmits the downlink signals to each user terminal UE of the user set, with varying transmission power (step ST10).

Next, each user terminal UE that is selected by the radio base station BS as being in the user set not only receives the downlink signal for the subject terminal, but also receives the downlink signals for other terminals that are non-orthogonal-multiplexed in the same radio resource (step ST11). Then, each user terminal UE cancels the downlink signals for other terminals with lower channel gains and greater transmission power than the subject terminal, by means of SIC, and extracts (separates) the signal for the subject terminal. In this case, the downlink signals for other terminals with higher channel gains and lower transmission power than the subject terminal do not become interference signals, and are therefore ignored.

Now, the above-described PF scheduling metric calculation process is carried out with respect to all the candidate user sets. Consequently, the number of user terminals and the number of transmission beams subject to scheduling increase, the amount of calculation in exhaustive search becomes enormous. To be more specific, the amount of calculation in exhaustive search increases exponentially in proportion to the number of candidate user sets.

Also, when the MCS selection threshold is controlled by using OLLA (Outer-Loop Link Adaptation), depending on ACKs/NACKs that are fed back by the HARQ (Hybrid ARQ) process, NOMA and MCS control by OLLA are incompatible. Since the MCS selection threshold is adaptively controlled depending on the received quality of data, if each user terminal UE's transmission power is controlled dynamically in frequency/time directions by NOMA, the MCS selection threshold fluctuates and the accuracy of MCS control deteriorates.

So, the present inventors have arrived at the present invention in order to reduce the amount of calculation in exhaustive search for determining user sets, and reduce the fluctuations of power control. That is, the present invention is to define a plurality of user groups depending on the channel gains of user terminals and select user terminals from the user groups so as to reduce the total number of candidate user sets. Also, the present invention is to allocate transmission power to each user group on a fixed basis so as to reduce the fluctuations of transmission power and improve the accuracy of MCS control. By means of this configuration, it becomes possible to realize optimal link adaptation.

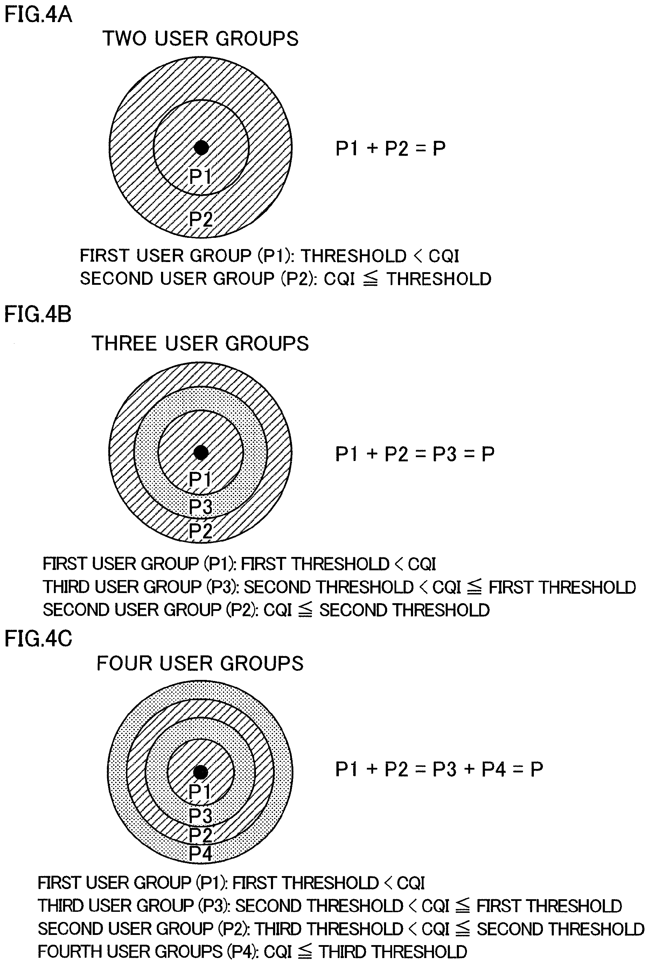

Now, the method of grouping user terminals and allocating transmission power will be described with reference to FIG. 4. Note that a case will be described below where one user terminal is selected from each of a plurality of user groups and non-orthogonal-multiplexed. Also, although a case will be described where two user terminals are non-orthogonal-multiplexed in one radio resource (resource block, etc.), it is equally possible to non-orthogonal-multiplex three or more user terminals in one radio resource. Moreover, the method of grouping and transmission power allocation is simply an example, and is by no means limited to the following configuration.

FIG. 4A shows a case where user terminals in a coverage area (cell) are grouped into first and second user groups. In this case, each user terminal is placed in a group depending on the magnitude of the channel gain of each user terminal in the coverage area. For the channel gain, each user terminal calculates, for example, a CQI (Channel Quality Indicator). Note that the CQI may be an instantaneous or a long-term average CQI, or may be a narrowband or a wideband CQI. Also, the channel gain has only to be an indicator to show the received quality of channels, and may be, for example, the received SINR or the RSRP.

In this case, user terminals whose CQI is greater than a predetermined threshold belong to the first user group, and user terminals whose CQI is equal to or lower than the predetermined threshold belong to the second user group. That is, an area of the first user group is formed near the center of the coverage area, and an area of the second user group is formed outside the first user group area. To the first and second user groups, transmission power is allocated by the radio base station on a fixed basis. The first user group is allocated first transmission power P1, and the second user group is allocated second transmission power P2, which is given by subtracting the first transmission power P1 from the total transmission power P.

In this case, the first user group, which is near the center of the coverage area, is allocated the relatively small transmission power P1, and the second user group, which is far from the coverage area, is allocated the relatively large transmission power P2. In this way, the total transmission power P for an arbitrary radio resource is distributed in such a ratio that the user group having the larger channel gain is allocated less and the user group having the smaller channel gain is allocated more. Then, one user terminal is selected from each of the first and second user groups, and non-orthogonal-multiplexed over the same radio resource, with varying transmission power P1 and P2.

FIG. 4B shows a case where user terminals in a coverage area (cell) are grouped into first to third user groups. In this case, user terminals whose CQI is greater than first threshold belong to the first user group, user terminals whose CQI is equal to or lower than a second threshold belong to the second user group, and user terminals whose CQI is equal to or lower than the first threshold and greater than the second threshold belong to the third user group. That is, areas of the first user group, the third user group and the second user group are formed as co-centric circles that stretch outward from the center of the coverage area.

The first user group is allocated first transmission power P1, and the second user group is allocated second transmission power P2, which is given by subtracting the first transmission power P1 from the total transmission power P. The third user group is allocated the total transmission power P. Then, one user terminal is selected from each of the first and second user groups, and non-orthogonal-multiplexed over the same radio resource, with varying transmission power P1 and P2. Furthermore, one user terminal is selected from the third user group, and, with the transmission power P, orthogonal-multiplexed over a different radio resource from that of the first and second user groups.

FIG. 4C shows a case where user terminals in a coverage area (cell) are grouped into first to fourth user groups. In this case, user terminals whose CQI is greater than a first threshold belong to the first user group, and user terminals whose CQI is equal to or lower than second threshold and greater than a third threshold belong to the second user group. Also, user terminals whose CQI is equal to or lower than the first threshold and greater than the second threshold belong to the third user group, and user terminals whose CQI is equal to or lower than the third threshold belong to the fourth user group. That is, areas of the first user group, the third user group, the second user group and the fourth user group are formed as co-centric circles that stretch outward from the center of the coverage area.

The first user group is allocated first transmission power P1, and the second user group is allocated second transmission power P2, which is given by subtracting the first transmission power P1 from the total transmission power P. The third user group is allocated third transmission power P3, and the fourth user group is allocated fourth transmission power P4, which is given by subtracting the third transmission power P3 from the total transmission power P. Then, one user terminal is selected from each of the first and second user groups, and non-orthogonal-multiplexed over the same radio resource, with varying (different) transmission power P1 and P2. Furthermore, one user terminal is selected from each of the third and fourth user groups, and orthogonal-multiplexed over a different radio resource from that of the first and second user groups with varying transmission power P3 and P4.

Here, user terminals of more distant user groups are selected and non-orthogonal-multiplexed, based on each user's channel gain. Note that the above configuration by no means limits the user groups to non-orthogonal-multiplex. For example, in the case illustrated in FIG. 4C, it is equally possible to non-orthogonal-multiplex the user terminals of the first and fourth user groups, and non-orthogonal-multiplex the user terminals of the second and third user groups. Also, the user groups to orthogonal-multiplex are not limited to the configuration of multiplexing over different radio resources. For example, in the case illustrated in FIG. 4B, it is equally possible to non-orthogonal-multiplex the user terminals of the first and second user groups over the same radio resource, and code-multiplex the user terminals of the third user group over this radio resource.

In this way, user terminals in the coverage area are assigned to a plurality of user groups and one user terminal is selected from each group, so that it is possible to reduce the total number of candidate user sets. The total number of candidate user sets per subband can be represented by following equation 3, where $N_{max}$ is the number of users to non-orthogonal-multiplex, M is the total number of user terminals UE that belong to the coverage area and R is the number of user groups. Although, for ease of explanation, a case will be described here where the total number of user terminals is divided by the number of groups and an equal number of user terminals are assigned to each user group, it is equally possible to make the number of user terminals different on a per user group basis.

[3]

$$R \times \binom{M/R}{1} \quad \ldots \text{(Equation 3)}$$

For example, a case will be discussed here where two user terminals are selected when the total number of user terminals in the coverage area is ten. If the coverage area is not divided into groups, the number of candidate user sets becomes forty-five ($_{10}C_2$). On the other hand, if the coverage area is grouped in two user groups, it is only necessary to select one user terminal from each user group, so that the number of candidate user sets becomes twenty-five ($_5C_1 \times {}_5C_1$). Consequently, it is possible to reduce the number of candidate user sets and reduce the amount of calculation in exhaustive search for determining user sets.

Also, since transmission power is allocated to each user group on a fixed basis, transmission power does not fluctuate as long as user terminals belong to the same user group. Consequently, even when OLLA is employed in MCS control, it is possible to avoid selecting inadequate modulation schemes and coding schemes, and improve the accuracy of MCS control. Note that which user group a user terminal belongs to may be identified on the user terminal side, or may be identified on the radio base station side.

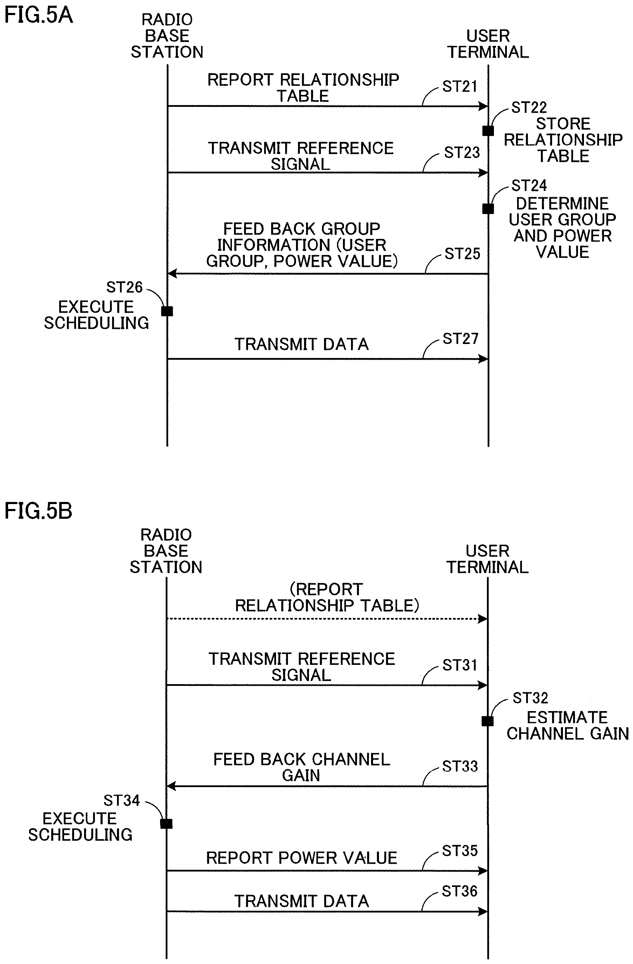

Now, the steps of communication in NOMA will be described below with reference to FIG. 5. Note that FIG. 5A illustrates an example of a case where which user group a subject user terminal belong to is identified on the user terminal side. Also, FIG. 5B shows an example of a case where which user group each user terminal belongs to is identified on the radio base station side.

First a case, which is not according to the claimed invention, will be described here where the user group to which a subject terminal belongs is identified on the user terminal side. As shown in FIG. 5A, a relationship table to show the relationship between the magnitude of channel gain and user groups is reported from a radio base station to user terminals (step ST21). The relationship table is stored in the user terminals (step ST22). Since transmission power is configured with the user groups on a fixed basis, not only channel gain and user groups, but also channel gain and the power values of transmission power are associated with each other in the relationship table.

Note that the relationship table has only to make it possible to identify which user group a user terminal belongs to, and may also show the relationship between the magnitude of channel gain and the allocation of transmission power. Also, if the relationship table is stored in advance in each user terminal, the process of steps ST21 to 22 can be skipped.

Next, reference signals are transmitted from the radio base station to the user terminals (step ST23). A user terminal estimates the magnitude of channel gain from the reference signal, and, with reference to the relationship table, determines the user group where the subject terminal belongs, and the downlink signal power value (step ST24). Group information to show the user groups determined by the user terminals is fed back from the user terminals to the radio base station (step ST25). Note that the group information may be the user groups, or may be the power values allocated to each user terminal.

Next, the radio base station executes scheduling based on the group information that is fed back from the user terminals (step ST26). That is, in the state in which the amount of calculation in exhaustive search is reduced by means of grouping, the user set to maximize the PF scheduling metric is determined from a plurality of candidate user sets. Then, each user terminal constituting the user set is non-orthogonal-multiplexed, and downlink signals are transmitted from the radio base station to each user terminal with varying transmission power (step ST27).

According to this configuration, a user terminal determines the power value to be allocated to the subject terminal, so that it is not necessary to report the power value from the radio base station to the user terminal, and therefore simplify the steps of communication. Note that, although a configuration has been described above where the radio base station configures transmission power as requested from the user terminals by receiving group information from the user terminals, this configuration is by no means limiting. The radio base station may prioritize the transmission power determined in the radio base station over the transmission power requested from the user terminals.

Subsequently, a case will be described where the user group to which a user terminal belongs is identified on the radio base station side will be described. As shown in FIG. 5B, reference signals are transmitted from the radio base station to the user terminals (step ST31). The user terminals estimate the magnitude of channel gain from the reference signals (step ST32), and the channel gains are fed back from the user terminals to the radio base station (step ST33).

Next, the radio base station determines the user groups where the user terminals belong and the downlink signal power values, based on the channel gains fed back from the user terminals, and executes scheduling (step ST34). That is, in the state in which the amount of calculation in exhaustive search is reduced by means of grouping, the user set to maximize the PF scheduling metric is determined from a plurality of candidate user sets. When a user terminal is selected in the radio base station as being in a user set, the power value allocated to the user terminal is transmitted from the radio base station to the user terminal (step ST35). Then, each user terminal constituting the user set is non-orthogonal-multiplexed, and downlink signals are transmitted from the radio base station to each user terminal with varying transmission power (step ST36).

According to this configuration, the radio base station determines the user groups, so that it is not necessary to transmit a table that shows the relationship between the magnitude of channel gain and user groups to the user terminals. Note that, referring back to step ST35, instead of the configuration to transmit the power value from the radio base station to the user terminal, a configuration to report a group index to represent the user group may be employed as well. In this case, as shown with the dotted-line arrow, prior to step ST31, a relationship table to show the relationship between user group indices and the allocation of transmission power is reported from the radio base station to the user terminals.

Now, the structure of the radio communication system according to the present embodiment will be described below. In this radio communication system, the above-described method of user terminal grouping and transmission power allocation is applied.

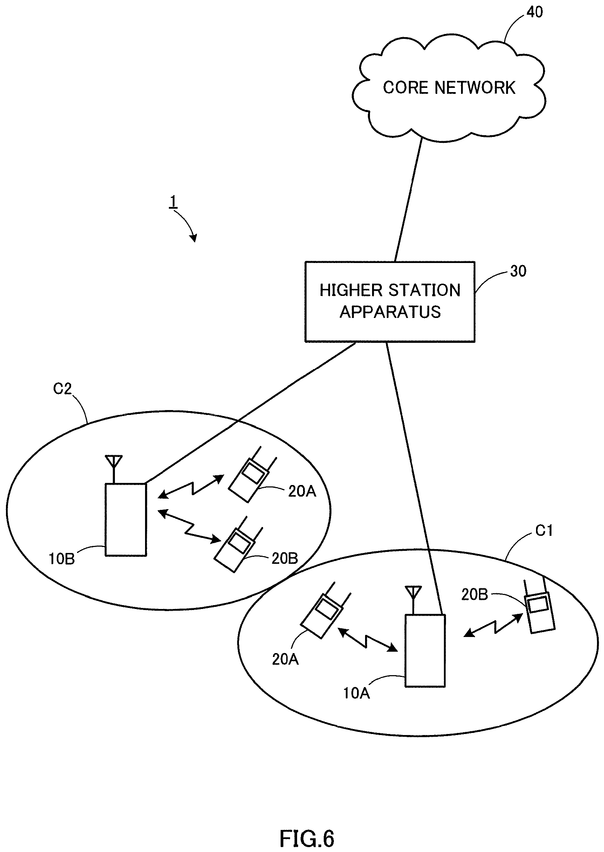

FIG. 6 is a diagram to show a schematic structure of a radio communication system according to the present embodiment. Note that the radio communication system shown in FIG. 6 is a system to accommodate, for example, the LTE system or the LTE-A (LTE-Advanced) system. This radio communication system may be referred to as "IMT-advanced," or may be referred to as "4G" or "FRA (Future Radio Access)."

The radio communication system 1 shown in FIG. 6 includes radio base stations 10 (10A and 10B) and a plurality of user terminals 20 (20A and 20B) that communicate with these radio base stations 10. The radio base stations 10 are connected with a higher station apparatus 30, and this higher station apparatus 30 is connected with a core network 40. Each user terminal 20 can communicate with the radio base stations 10 in cells C1 and C2. Note that the higher station apparatus 30 may be, for example, an access gateway apparatus, a radio network controller (RNC), a mobility management entity (MME) and so on, but is by no means limited to these.

The radio base stations 10 may be eNodeBs (eNBs) that form macro cells, or may be any of RRHs (Remote Radio Heads), femto base stations, pico base stations and so on that form small cells. Also, the radio base stations 10 may be referred to as "transmitting/receiving points" and so on. The user terminals 20 are terminals to support various communication schemes such as LTE, LTE-A and so on, and may include both mobile communication terminals and fixed communication terminals.

In the radio communication system 1, as radio access schemes, OFDMA (Orthogonal Frequency Division Multiple Access) and NOMA (Non-Orthogonal Multiple Access) are applied to the downlink, and SC-FDMA (Single-Carrier Frequency Division Multiple Access) is applied to the uplink. OFDMA is a multi-carrier transmission scheme to divide the transmission band into subbands and orthogonal-multiplex user terminals 20, and NOMA is a multi-carrier transmission scheme to non-orthogonal-multiplex user terminals 20 with varying transmission power on a per subband basis. SC-FDMA is a single-carrier transmission scheme to allocate user terminals 20 to radio resources that are continuous in the frequency direction.

Also, in the radio communication system 1, as downlink communication channels, a downlink shared data channel (PDSCH), which is used by each user terminal 20 on a shared basis, downlink L1/L2 control channels (PDCCH, PCFICH, PHICH, Enhanced PDCCH), a broadcast channel (PBCH) and so on are used. User data and higher control information are transmitted by the PDSCH (Physical Downlink Shared Channel). Scheduling information for the PDSCH and the PUSCH is transmitted by the PDCCH (Physical Downlink Control CHannel) and the EPDCCH (Enhanced Physical Downlink Control Channel). The number of OFDM symbols to use for the PDCCH is transmitted by the PCFICH (Physical Control Format Indicator Channel). HARQ ACKs/NACKs in response to the PUSCH are transmitted by the PHICH (Physical Hybrid-ARQ Indicator Channel).

Also, in the radio communication system 1, as uplink communication channels, an uplink shared channel (PUSCH), which is used by each user terminal 20 on a shared basis, an uplink control channel (PUCCH), a random access channel (PRACH) and so on are used. User data and higher control information are transmitted by the PUSCH (Physical Uplink Shared Channel). Also, by the PUCCH (Physical Uplink Control Channel) or the PUSCH, downlink channel state information (CSI: Channel State Information), ACKs/NACKs and so on are transmitted.

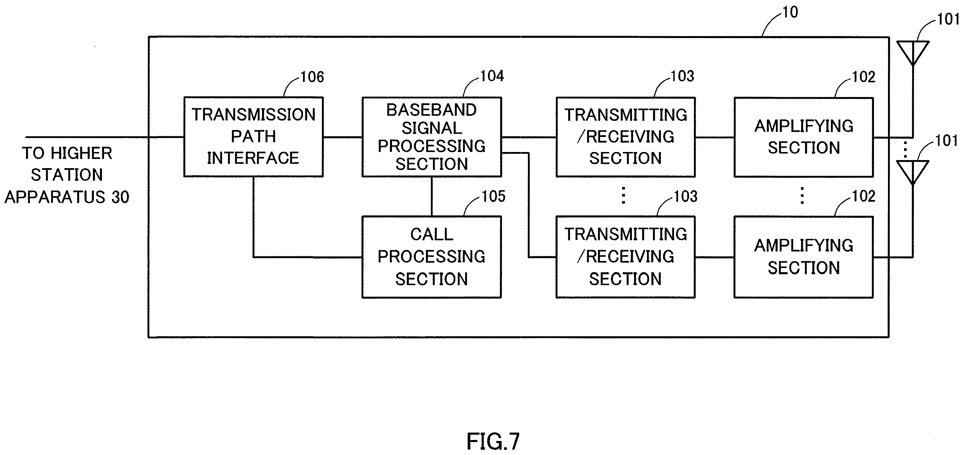

FIG. 7 is a diagram to show an example structure of a radio base station according to the present embodiment. The radio base station 10 has transmitting/receiving antennas 101, amplifying sections 102, transmitting/receiving sections (transmitting sections and receiving sections) 103, a baseband signal processing section 104, a call processing section 105 and a transmission path interface 106.

User data to be transmitted from the radio base station 10 to a user terminal 20 on the downlink is input from the higher station apparatus 30, into the baseband signal processing section 104, via the transmission path interface 106.

In the baseband signal processing section 104, the input user data is subjected to a PDCP layer process, division and coupling of the user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process, and the result is transferred to each transmitting/receiving section 103. Furthermore, downlink control data is also subjected to transmission processes such as channel coding and an inverse fast Fourier transform, and transferred to each transmitting/receiving section 103.

Each transmitting/receiving section 103 converts the baseband signals, which are pre-coded and output from the baseband signal processing section 104 on a per antenna basis, into a radio frequency band. The amplifying sections 102 amplify the radio frequency signals having been subjected to frequency conversion, and transmit the results through the transmitting/receiving antennas 101.

On the other hand, data that is transmitted from a user terminal 20 to the radio base station 10 is received in each transmitting/receiving antenna 101 and input in the amplifying section 102. The radio frequency signals input from each transmitting/receiving antenna 101 are amplified in the amplifying sections 102 and sent to each transmitting/receiving section 103. The amplified radio frequency signals are subjected to frequency conversion in each transmitting/receiving section 103, and input in the baseband signal processing section 104.

In the baseband signal processing section 104, the user data that is included in the input baseband signals is subjected to an FFT (Fast Fourier Transform) process, an IDFT (Inverse Discrete Fourier Transform) process, error correction decoding, a MAC retransmission control receiving process, and RLC layer and PDCP layer receiving processes, and transferred to the higher station apparatus 30 via the transmission path interface 106. The call processing section 105 performs call processing such as setting up and releasing communication channels, manages the state of the radio base station 10 and manages the radio resources.

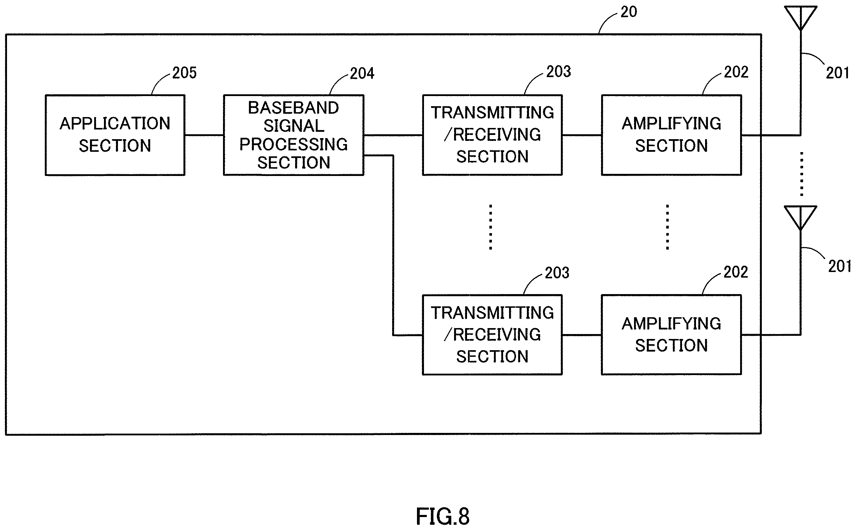

FIG. 8 is a block diagram to show an example structure of a user terminal not according to the invention. The user terminal 20 has a plurality of transmitting/receiving antennas 201, amplifying sections 202, transmitting/receiving sections (receiving sections) 203, a baseband signal processing section 204 and an application section 205.

Downlink data is received by a plurality of transmitting/receiving antennas 201 and input in the amplifying sections 202. Radio frequency signals that are input from each transmitting/receiving antenna 201 are amplified in the amplifying sections 202 and sent to each transmitting/receiving section 203. The radio frequency signals are converted into baseband signals in each transmitting/receiving section 203, and input in the baseband signal processing section 204. The baseband signal processing section 204 applies receiving process such as an FFT process, error correction decoding, a retransmission control receiving process and so on, to the baseband signals. The user data that is included in the downlink data is transferred to the application section 205. The application section 205 performs processes related to higher layers above the physical layer and the MAC layer and so on. In addition, in the downlink data, broadcast information is also transferred to the application section 205.

Meanwhile, uplink user data is input from the application section 205 into the baseband signal processing section 204. The baseband signal processing section 204 applies a retransmission control (H-ARQ (Hybrid ARQ)) transmission process, channel coding, pre-coding, a DFT process, an IFFT process and so on to the input user data, and transfers the result to each transmitting/receiving section 203. The baseband signals that are output from the baseband signal processing section 204 are converted into a radio frequency band in the transmitting/receiving sections 203. After that, the amplifying sections 202 amplify the radio frequency signals having been subjected to frequency conversion, and transmit the results from the transmitting/receiving antennas 201.

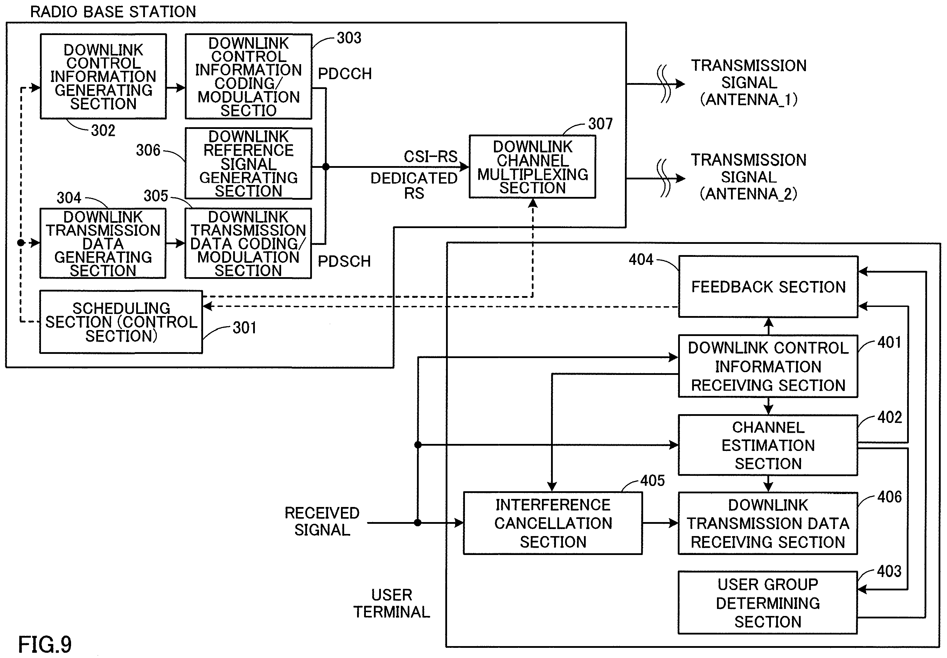

FIG. 9 is a block diagram to show example structures of the baseband signal processing sections provided in the radio base station and the user terminals according to the present embodiment. Note that, although FIG. 9 shows only part of the structures, the radio base station 10 and the user terminals 20 have required components without shortage.

As shown in FIG. 9, the radio base station 10 has a scheduling section (control section) 301, a downlink control information generating section 302, a downlink control information coding/modulation section 303, a downlink transmission data generating section 304, a downlink transmission data coding/modulation section 305, a downlink reference signal generating section 306 and a downlink channel multiplexing section 307.

The scheduling section 301 selects user terminals 20 from each user group that is determined based on the channel gain of each user terminal 20, and determines the user sets to orthogonal-multiplex over an arbitrary radio resource. When the grouping is determined on the user terminal 20 side (see FIG. 5A), group information that is fed back from the user terminals 20 is received in the transmitting/receiving sections 103 (see FIG. 7). The scheduling section 301 determines the user group where each user terminal 20 belongs, based on the group information. Note that the group information has only to be information that can identify the user group each user terminal 20 belongs to, and may be the user groups, or may be the power values to be allocated to each user terminal 20.

Also, when the grouping is determined on the radio base station 10 side (see FIG. 5B), the channel gains that are fed back from the user terminals 20 are received in the transmitting/receiving sections 103 (see FIG. 7). The scheduling section 301 recognizes the user group which each user terminal 20 belongs to, based on the channel gain. Note that the channel gains have only to show the received quality of the channels, and may be CQIs, received SINRs and RSRPs, and may be instantaneous values or long-term average values. The scheduling section 301 determines the user group where each user terminal 20 belongs, by comparing the magnitude of the channel gain fed back from each user terminal 20 and a predetermined threshold.

The scheduling section 301 prepares a plurality of candidate user sets by selecting user terminals 20 from each user group, and determines the user set to maximize the PF scheduling metric from among the plurality of candidate user sets. In this case, the coverage area is divided into a plurality of user groups, and one user terminal is selected from each group, so that the total number of candidate user sets is reduced. Consequently, the amount of calculation in exhaustive search for determining user sets is reduced.

Also, the scheduling section 301 allocates transmission power that is determined per user group on a fixed basis, to each user terminal 20 that is non-orthogonal-multiplexed, per radio resource. At this time, the scheduling section 301 distributes the total transmission power for an arbitrary radio resource in such a ratio that a user group where user terminals 20 with large channel gains belong is allocated less and a user group where user terminals 20 with large channel gains belong is allocated more. Also, the scheduling section 301 determines the coding rates and modulation schemes of downlink data based on the channel state information from the user terminals 20.

By means of this configuration, as long as user terminals 20 belong to the same user group, the transmission power to be allocated to the user terminals 20 is prevented from fluctuating. Consequently, when OLLA is applied to MCS control, the accuracy of MCS control improves. Also, the scheduling section 301 non-orthogonal-multiplexes the user terminals 20 selected as the same user set, and orthogonal-multiplexes the user terminals 20 selected as different user sets (see FIG. 4B and FIG. 4C). The scheduling section 301 thus schedules the user terminals 20 in the user groups.

The downlink control information generating section 302 generates user terminal-specific downlink control information (DCI), which is transmitted in the PDCCH. The downlink control information is output to the downlink control information coding/modulation section 303. The downlink control information coding/modulation section 303 carries out channel coding and modulation of the downlink control information. The modulated downlink control information is output to the downlink channel multiplexing section 307.

The user terminal-specific downlink control information includes a DL assignment, which is PDSCH allocation information, a UL grant, which is PUSCH allocation information, and so on. Also, the downlink control information includes control information for requesting a CSI feedback to each user terminal 20, information that is required in the receiving process of signals that are non-orthogonal-multiplexed, and so on. For example, when grouping is determined on the radio base station 10 side (see FIG. 5B), information about the downlink signal transmission power of the user terminals 20 (power values or group indices) and so on may be included in the downlink control information. However, the information about downlink signal transmission power may be included in higher control information as well, which is reported through higher layer signaling (for example, RRC signaling).

The downlink transmission data generating section 304 generates downlink user data on a per user terminals 20 basis. The downlink user data that is generated in the downlink transmission data generating section 304 is output, with the higher control information, as downlink transmission data to be transmitted in the PDSCH, to the downlink transmission data coding/modulation section 305. The downlink transmission data coding/modulation section 305 carries out channel coding and modulation of the downlink transmission data for each user terminal 20. The downlink transmission data is output to the downlink channel multiplexing section 307.

The downlink reference signal generating section 306 generates downlink reference signals (the CRS, the CSI-RS, the DM-RS, etc.). The downlink reference signals are output to the downlink channel multiplexing section 307.

The downlink channel multiplexing section 307 combines the downlink control information, the downlink reference signals and the downlink transmission data (including higher control information), and generates a downlink signal. To be more specific, in accordance with scheduling information that is reported from the scheduling section 301, the downlink channel multiplexing section 307 carries out non-orthogonal-multiplexing so that downlink signals for a plurality of user terminals 20, selected in the scheduling section 301, are transmitted with predetermined transmission power. The downlink signal that is generated in the downlink channel multiplexing section 307 is transmitted to the user terminals 20 via various transmission processes.

On the other hand, a user terminal 20 has a downlink control information receiving section 401, a channel estimation section (estimation section) 402, a user group determining section 403, a feedback section 404, an interference cancelation section 405 and a downlink transmission data receiving section 406. The downlink signal that is transmitted from the radio base station 10 is separated into the downlink control information, the downlink transmission data (including higher control information) and the downlink reference signals, via various receiving processes. The downlink control information is input in the downlink control information receiving section 401, the downlink transmission data is input in the downlink transmission data receiving section 406 via the interference cancelation section 405, and the downlink reference signals are input in the channel estimation section 402. The downlink control information is demodulated in the downlink control information receiving section 401 and output to the channel estimation section 402, the feedback section 404, the interference cancelation section 405 and so on.

The channel estimation section 402 performs channel estimation based on the downlink reference signals and acquires the channel gain. When grouping is determined on the user terminal 20 side (see FIG. 5A), which is not part of the invention, the user group determining section 403 determines the user group to which the subject terminal belongs, based on the magnitude of the channel gain. Also, the user group determining section 403 determines the power value of transmission power to be allocated to the subject terminal. In this case, the user group and the power value are determined with reference to a relationship table, which is reported from the radio base station 10 to the user terminal 20 in advance. Then, the user group and the power value are fed back to the radio base station 10, as group information, through the feedback section 404.

On the other hand, when grouping is determined on the radio base station 10 side (see FIG. 5B), channel gain that is acquired by channel estimation is fed back to the radio base station 10 through the feedback section 404. As described above, the user group to which the user terminal 20 belongs and the power value to be allocated to the user terminal 20 are determined in the radio base station 10 based on the magnitude of the channel gain.

The interference cancelation section 405 cancels interference by the downlink signals allocated to other terminals, based on the transmission power allocated to the subject terminal. Note that, when grouping is determined on the user terminal 20 side (see FIG. 5A), the transmission power is determined in the subject terminal, so that it is not necessary to receive information about downlink signal transmission power from the radio base station 10. When grouping is determined on the radio base station 10 side (see FIG. 5B), the user group index or the power value of transmission power is transmitted from the radio base station 10 as information about downlink signal transmission power.

Then, the interference cancelation section 405 cancels the downlink signals for user terminals 20, to which greater transmission power than that of the subject terminal is allocated, by means of SIC, from received signals, in descending order of transmission power. On the other hand, the downlink signals for user terminals 20 to which lower transmission power than that of the subject terminal is allocated are handled as noise and disregarded without cancelation.

As described above, according to the radio communication system 1 of the present embodiment, transmission power is fixed per user group, so that, as long as user terminals 20 belong to the same user group, transmission power does not fluctuate. Consequently, it is possible to avoid selecting inadequate modulation schemes and coding schemes due to the fluctuations of transmission power control. Also, since user sets are determined by selecting users from every user group, it is possible to reduce the amount of calculation for determining user sets, compared to the configuration to determine user sets from all users.

The present invention is by no means limited to the above embodiment and can be implemented with various changes. For example, it is possible to adequately change the number of carriers, the carrier bandwidth, the signaling method, the number of processing sections, the order of processes and so on in the above description, without departing from the scope of the present invention, and implement the present invention. Besides, the present invention can be implemented with various changes, without departing from the scope of the present invention, which is defined by the appended claims.

**Claims**

1. A radio base station (10) comprising:

   a control section (301) configured to non-orthogonally multiplex downlink signals for a set of a plurality of selected user terminals (20) over a same radio resource, the set of the plurality of selected user terminals (20) belonging to respective groups defined depending on different channel gains;
   a transmission section configured to transmit the downlink signals with different transmission power (P1, P2, P3, P4) corresponding to the respective groups of different channel gains, where transmission power to each group is allocated on a fixed basis; and
   a receiving section that is configured to receive information (ST33) regarding a channel gain from each user terminal (20),
   wherein the control section (301) is configured to determine a group of the respective groups to which the user terminal belongs according to the channel gain of the user terminal.

2. The radio base station (10) according to claim 1, wherein the control section (301) is configured to distribute total transmission power for the downlink signals for the plurality of user terminals (20) in a ratio that a group where a user terminal with a large channel gain belongs is allocated less and a group where a user terminal with a small channel gain belongs is allocated more.

3. The radio base station (10) according to claim 2, wherein the control section (301) is configured to allocate first transmission power to a group in which a channel gain of a user terminal (20) is greater than a predetermined threshold, and to allocate second transmission power, which is given by subtracting the first transmission power from total transmission power, to a group in which a channel gain of a user terminal (20) is equal to or lower than the predetermined threshold.

4. The radio base station (10) according to claim 1, wherein the transmission section is configured to report a power value to be allocated to the user terminal, to the user terminal.

5. The radio base station (10) according to any one of claims 1 to 3, wherein the control section (301) is configured to select, as the plurality of selected user terminals (20), a user terminal of each of the groups, and to orthogonal-multiplex signals for user terminals other than the selected user terminals.

6. The radio base station according to claim 1, wherein the channel gains are channel quality indicators, CQIs, reported from the user terminals (20).

7. A radio communication method for a radio base station (10), comprising:

   non-orthogonally multiplexing downlink signals for a set of a plurality of selected user terminals (20) over a same radio resource, the set of the plurality of user terminals (20) belonging to respective groups defined depending on different channel gains;
   transmitting the downlink signals with different transmission power (P1, P2, P3, P4) corresponding to the respective groups of different channel gains, where transmission power to each group is allocated on a fixed basis;
   receiving information (ST33) regarding a channel gain from each user terminal (20); and
   determining a group of the respective groups to which the user terminal belongs according to the channel gain of the user terminal.

**Patentansprüche**

1. Funkbasisstation (10), umfassend:

    einen Steuerabschnitt (301), konfiguriert zum nicht orthogonalen Multiplexen von Downlinksignalen für eine Reihe einer Vielzahl von ausgewählten Benutzerendgeräten (20) über eine selbe Funkressource, wobei die Reihe der Vielzahl von ausgewählten Benutzerendgeräten (20) jeweiligen Gruppen angehört, die in Abhängigkeit von unterschiedlichen Kanalverstärkungen definiert sind;
    einen Sendeabschnitt, konfiguriert zum Senden der Downlinksignale mit unterschiedlicher Übertragungsleistung (P1, P2, P3, P4) entsprechend den jeweiligen Gruppen mit unterschiedlichen Kanalverstärkungen, wobei die Übertragungsleistung jeder Gruppe auf einer feststehenden Grundlage zugewiesen ist; und
    einen Empfangsabschnitt, der konfiguriert ist, um Informationen (ST33) in Bezug auf eine Kanalverstärkung von jedem Benutzerendgerät (20) zu empfangen,
    wobei der Steuerabschnitt (301) konfiguriert ist, um eine Gruppe der jeweiligen Gruppen zu bestimmen, denen das Benutzerendgerät entsprechend der Kanalverstärkung des Benutzerendgeräts angehört.

2. Funkbasisstation (10) nach Anspruch 1, wobei der Steuerabschnitt (301) konfiguriert ist, um eine Gesamtübertragungsleistung für die Downlinksignale für die Vielzahl von Benutzerendgeräten (20) in einem Verhältnis zu verteilen, dass einer Gruppe, der ein Benutzerendgerät mit einer hohen Kanalverstärkung angehört, weniger zugewiesen wird, und einer Gruppe, der ein Benutzerendgerät mit einer niedrigen Kanalverstärkung angehört, mehr zugewiesen wird.

3. Funkbasisstation (10) nach Anspruch 2, wobei der Steuerabschnitt (301) konfiguriert ist, um erste Übertragungsleistung einer Gruppe zuzuweisen, in der eine Kanalverstärkung eines Benutzerendgeräts (20) größer als eine vorbestimmte Schwelle ist, und um zweite Übertragungsleistung, die sich durch Abziehen der ersten Übertragungsleistung von der Gesamtübertragungsleistung ergibt, einer Gruppe zuzuweisen, in der eine Kanalverstärkung eines Benutzerendgeräts (20) gleich wie oder kleiner als die vorbestimmte Schwelle ist.

4. Funkbasisstation (10) nach Anspruch 1, wobei der Sendeabschnitt konfiguriert ist, um einen Leistungswert, der dem Benutzerendgerät zuzuweisen ist, dem Benutzerendgerät zu melden.

5. Funkbasisstation (10) nach einem der Ansprüche 1 bis 3, wobei der Steuerabschnitt (301) konfiguriert ist, um als die Vielzahl von ausgewählten Benutzerendgeräten (20) ein Benutzerendgerät aus jeder der Gruppen auszuwählen, und Signale für andere Benutzerendgeräte als die ausgewählten Benutzerendgeräte orthogonal zu multiplexen.

6. Funkbasisstation nach Anspruch 1, wobei die Kanalverstärkungen Kanalqualitätsindikatoren, CQIs, sind, die von den Benutzerendgeräten (20) gemeldet werden.

7. Funkkommunikationsverfahren für eine Funkbasisstation (10), umfassend:

    nicht orthogonales Multiplexen von Downlinksignalen für eine Reihe einer Vielzahl von ausgewählten Benutzerendgeräten (20) über eine gleiche Funkressource, wobei die Reihe der Vielzahl von Benutzerendgeräten (20) jeweiligen Gruppen angehört, die in Abhängigkeit von unterschiedlichen Kanalverstärkungen definiert sind;
    Senden der Downlinksignale mit unterschiedlicher Übertragungsleistung (P1, P2, P3, P4) entsprechend den jeweiligen Gruppen mit unterschiedlichen Kanalverstärkungen, wobei Übertragungsleistung jeder Gruppe auf einer feststehenden Grundlage zugewiesen ist;
    Empfangen von Informationen (ST33) in Bezug auf eine Kanalverstärkung von jedem Benutzerendgerät (20); und
    Bestimmen einer Gruppe der jeweiligen Gruppen, denen das Benutzerendgerät entsprechend der Kanalverstärkung des Benutzerendgeräts angehört.

**Revendications**

1. Station de base radio (10) comprenant :

    une section de commande (301) configurée pour multiplexer orthogonalement des signaux en liaison descendante pour un ensemble d'une pluralité de terminaux utilisateur sélectionnés (20) sur une ressource radio identique, l'ensemble de la pluralité de terminaux utilisateur sélectionnés (20) appartenant aux groupes respectifs définis selon différents gains de canal ;

une section de transmission configurée pour transmettre les signaux en liaison descendante avec une puissance de transmission différente (P1, P2, P3, P4) correspondant aux groupes respectifs de différents gains de canal, où la puissance de transmission à chaque groupe est attribuée sur une base fixe ; et

une section de réception qui est configurée pour recevoir des informations (ST33) concernant un gain de canal de chaque terminal utilisateur (20),

dans lequel la section de commande (301) est configurée pour déterminer un groupe des groupes respectifs, auxquels le terminal utilisateur appartient selon le gain de canal du terminal utilisateur.

2. Station de base radio (10) selon la revendication 1, dans laquelle la section de commande (301) est configurée pour distribuer une puissance de transmission totale pour les signaux en liaison descendante pour la pluralité de terminaux utilisateur (20) dans un rapport qu'un groupe auquel un terminal utilisateur avec un grand gain de canal appartient est moins attribué et un groupe auquel un terminal utilisateur avec un petit gain de canal appartient est plus attribué.

3. Station de base radio (10) selon la revendication 2, dans laquelle la section de commande (301) est configurée pour attribuer une première puissance de transmission à un groupe, dans lequel un gain de canal d'un terminal utilisateur (20) est supérieur à un seuil prédéterminé, et pour attribuer une seconde puissance de transmission qui est donnée par soustraction de la première puissance de transmission de la puissance de transmission totale, à un groupe, dans lequel un gain de canal d'un terminal utilisateur (20) est égal ou inférieur au seuil prédéterminé.

4. Station de base radio (10) selon la revendication 1, dans laquelle la section de transmission est configurée pour rapporter une valeur de puissance à attribuer au terminal utilisateur, au terminal utilisateur.

5. Station de base radio (10) selon l'une quelconque des revendications 1 à 3, dans laquelle la section de commande (301) est configurée pour sélectionner, comme la pluralité de terminaux utilisateur sélectionnés (20), un terminal utilisateur de chacun des groupes, et pour multiplexer orthogonalement des signaux pour des terminaux utilisateur autres que les terminaux utilisateur sélectionnés.

6. Station de base radio selon la revendication 1, dans laquelle les gains de canal sont des indicateurs de qualité de canal, CQIs, rapportés par les terminaux utilisateur (20).

7. Procédé de communication radio pour une station de base radio (10) comprenant :

le multiplexage non-orthogonal de signaux en liaison descendante pour un ensemble d'une pluralité de terminaux utilisateur sélectionnés (20) sur une ressource radio identique, l'ensemble de la pluralité de terminaux utilisateur (20) appartenant aux groupes respectifs définis selon différents gains de canal ;

la transmission des signaux en liaison descendante avec une puissance de transmission différente (P1, P2, P3, P4) correspondant aux groupes respectifs de gains de canal différents, où la puissance de transmission à chaque groupe est attribuée sur une base fixe ;

la réception d'informations (ST33) concernant un gain de canal de chaque terminal utilisateur (20) ; et

la détermination d'un groupe des groupes respectifs, auxquels le terminal utilisateur appartient selon le gain de canal du terminal utilisateur.

|  | W-CDMA | LTE | FRA |
|---|---|---|---|
| RADIO RESOURCE ALLOCATION | NON-ORTHOGONAL (CDMA) | ORTHOGONAL (OFDMA) | ORTHOGONAL (OFDMA) + SUPERPOSITION/ CANCELLATION (NOMA) |
| LINK ADAPTATION | FAST TPC (TPC: TRANSMISSION POWER CONTROL) | AMC (AMC: ADAPTIVE MODULATION & CODING) | MUPA/AMC (MUPA: MULTI-USER POWER ALLOCATION) |
| MULTIPLE ACCESS IMAGE | NON-ORTHOGONAL ASSISTED BY POWER CONTROL | ORTHOGONAL BETWEEN USERS | SUPERPOSITION & INTERFERENCE CANCELLATION |

FIG.1

EP 3 016 453 B1

POWER

UE2
UE1

FREQ.

BS ◁ UE1 ○ → SIC OF UE2 SIGNAL → UE1 SIGNAL DECODING

UE2 SIGNAL DECODING

UE2

UE1 RECEIVER

$$y(1) = h(1)(x(1) + x(2)) + w(1)$$

$y(1)$ ○ → UE2 DECODING → ○ $x(2)$

$h(1)x(2)$

$h(1)x(1) + w(1)$ → UE1 DECODING → ○ $x(1)$

UE2 RECEIVER

$$y(2) = h(2)(x(1) + x(2)) + w(2)$$

$y(2)$ ○ → UE2 DECODING → ○ $x(2)$

HIGH ← RECEIVED SINR → LOW

FIG.2

EP 3 016 453 B1

ST01

FEED BACK CHANNEL GAIN OF SUBBAND TO BS

ST02

SELECT CANDIDATE USER SET

ST03

CALCULATE TRANSMISSION POWER OF SUBBAND

ST04

CALCULATE SINR OF SUBBAND

ST05

CALCULATE THROUGHPUT OF SUBBAND OF EACH UE

ST06

CALCULATE SCHEDULING METRIC OF SUBBAND

PER SUBBAND

PER CANDIDATE USER SET

ST07

SELECT USER SET TO MAXIMIZE SCHEDULING METRIC OF SUBBAND

ST08

CALCULATE AVERAGE SINR OF ALLOCATED SUBBAND

ST09

SELECT MCS THAT IS COMMON TO EACH USER OF ALLOCATED SUBBAND

ST10

TRANSMIT SIGNAL

ST11

RECEIVE SIGNAL

UE SIDE

BS SIDE

FIG.3

## FIG.4A

### TWO USER GROUPS

$$P1 + P2 = P$$

FIRST USER GROUP (P1): THRESHOLD $<$ CQI
SECOND USER GROUP (P2): CQI $\leqq$ THRESHOLD

## FIG.4B

### THREE USER GROUPS

$$P1 + P2 = P3 = P$$

FIRST USER GROUP (P1): FIRST THRESHOLD $<$ CQI
THIRD USER GROUP (P3): SECOND THRESHOLD $<$ CQI $\leqq$ FIRST THRESHOLD
SECOND USER GROUP (P2): CQI $\leqq$ SECOND THRESHOLD

## FIG.4C

### FOUR USER GROUPS

$$P1 + P2 = P3 + P4 = P$$

FIRST USER GROUP (P1): FIRST THRESHOLD $<$ CQI
THIRD USER GROUP (P3): SECOND THRESHOLD $<$ CQI $\leqq$ FIRST THRESHOLD
SECOND USER GROUP (P2): THIRD THRESHOLD $<$ CQI $\leqq$ SECOND THRESHOLD
FOURTH USER GROUPS (P4): CQI $\leqq$ THIRD THRESHOLD

FIG.5A

RADIO BASE STATION

USER TERMINAL

REPORT RELATIONSHIP TABLE    ST21

ST22
STORE RELATIONSHIP TABLE

TRANSMIT REFERENCE SIGNAL    ST23

ST24
DETERMINE USER GROUP AND POWER VALUE

FEED BACK GROUP INFORMATION (USER GROUP, POWER VALUE)    ST25

ST26
EXECUTE SCHEDULING

TRANSMIT DATA    ST27

FIG.5B

RADIO BASE STATION

USER TERMINAL

(REPORT RELATIONSHIP TABLE)

TRANSMIT REFERENCE SIGNAL    ST31

ST32
ESTIMATE CHANNEL GAIN

FEED BACK CHANNEL GAIN    ST33

ST34
EXECUTE SCHEDULING

REPORT POWER VALUE    ST35

TRANSMIT DATA    ST36

FIG.6

FIG.7

FIG.8

EP 3 016 453 B1

FIG.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011005791 A2

**Non-patent literature cited in the description**

- Requirements for Evolved UTRA and Evolved UTRAN. *3GPP TR 25.913*
- **NAGISA OTAO et al.** Performance of Non-orthogonal Multiple Access with SIC in Cellular Downlink Using Proportional Fair-Based Resource Allocation. *IEICE Transactions on Communications,* 25 October 2012, 344-351, http://ieeexplore.ieee.org/iel5/6324001/6328315/06328413.pdf
- Non-Orthogonal Multiple Access (NOMA) for Cellular Future Radio Access. **YUYA SAITO et al.** VEHICULAR TECHNOLOGY CONFERENCE. IEEE, 2013, 1-5